# EUROPÄISCHE PATENTSCHRIFT

(11) **EP 3 001 076 B1**
(45) Veröffentlichungstag und Bekanntmachung des Hinweises auf die Patenterteilung: **03.04.2019**
(21) Anmeldenummer: 15186374.3
(22) Anmeldetag: 23.09.2015
(51) Int. Cl.: F16K 15/03, F16L 55/10, F16K 27/02

(54) **RÜCKFLUSSVERHINDERER**
BACK FLOW PREVENTER
CLAPET ANTI-RETOUR

(30) Priorität: 25.09.2014 DE 102014113875
(43) Veröffentlichungstag der Anmeldung: 30.03.2016
(73) Patentinhaber: STRATE Technologie für Abwasser GmbH, 31157 Sarstedt (DE)
(72) Erfinder: Demmig, Detlev, 38723 Seesen (DE)
(74) Vertreter: Patentanwälte Thömen & Körner

(56) Entgegenhaltungen:
- EP-A2- 0 496 604
- DE-A1- 2 653 158
- DE-U1- 8 712 247
- US-A1- 2006 266 422

## Beschreibung

Die Erfindung betrifft einen Rückflussverhinderer einer Rohrleitung nach dem Oberbegriff des Anspruchs 1.

Rückflussverhinderer sind Bauteile, die insbesondere in Rohrleitungssystemen eingesetzt werden, aber auch überall dort Einsatz finden, wo der Fluss eines Mediums gerichtet verlaufen soll (siehe beispielsweise EP-A-496 604 oder DE-U87 12 247).

Sie weisen in der Regel eine Verschlussvorrichtung auf, welche selbsttätig öffnen und schließen kann und somit den Durchfluss des Mediums durch den Rückflussverhinderer in lediglich einer Richtung ermöglicht. Derartige Verschlussvorrichtungen weisen in der Regel ein drehbar gelagertes Schließelement auf, das starr an einer Achse befestigt ist, wobei die Rotationsachse der Drehachse senkrecht zur Durchflussrichtung der Verschlussvorrichtung ausgerichtet ist.

Sollte das Medium im Verlauf des Rohrleitungssystems einen Höhenunterschied überwinden müssen, so werden Steigungen in der Regel durch den Einsatz einer Förderpumpe überwunden.

Um eine Beschädigung an der Förderpumpe und der Rohrleitung zu vermeiden, werden heutige Rohrleitungssysteme in der Regel mit Rückflussverhinderern versehen, die das Zurückfließen des Restwassers in Richtung Förderpumpe verhindert.

Für einen sicheren Betrieb ist es erforderlich, dass der Schließvorgang des Schließelements beim Abschalten der Förderpumpe oder im Störungsfall möglichst schnell geschieht. Der Schließvorgang des Schließelements kann aktiv oder passiv erfolgen. Während bei passiv arbeitenden Verschlussvorrichtungen das Schließelement nach dem Abschalten der Förderpumpe oder im Störungsfall aufgrund des zurück fließenden Restwassers und/oder der Schwerkraft in eine Schließstellung verbracht wird, in der die Verschlussvorrichtung ein Zurückfließen des Restwassers verhindert, verfügen aktiv arbeitende Verschlussvorrichtungen über eine Rückstellvorrichtung, die den Schließvorgang des Schließelements unterstützt und aktiv beschleunigt.

Im geschlossenen Zustand der Verschlussvorrichtung lastet das gesamte Gewicht der Wassersäule des Restwassers auf dem Schließelement und dem Gehäuse des Rückflussverhinderers. Konstruktiv müsssen das Schließelement und das Gehäuse des Rückflussverhinderers so dimensioniert werden, dass es neben der entsprechenden Druckstufe, die sich aus der statisch auf dem Schließelement lastenden Wassersäule ergibt, auch Druckstößen innerhalb der Rohrleitung, wie sie beispielsweise beim Schließen der Verschlussvorrichtung auftreten, standhält.

Um die je nach Einsatzzweck nötige Druckstufe zu erzielen, werden die Gehäuse von Rückflussverhinderern heutzutage zumeist aus Stahlelementen, insbesondere Stahlblechen, oder aus Gusseisen mit einer entsprechend Materialstärke gefertigt. Diese Stahlelemente, insbesondere Stahlbleche sind zumeist derart ausgestaltet, dass die Fertigung der Stahlelemente, insbesondere Stahlbleche mit allgemein üblichen Maschinen gefertigt und anschließend zu der gewünschten Gehäuseform zusammengefügt werden können.

Aufgrund der vereinfachten Verarbeitbarkeit sind die Seitenwände des Gehäuses eines Rückflussverhinderers heutzutage zumeist eben bzw. plan ausgeformt. Diese Ausgestaltung der Seitenwände führt jedoch dazu, dass unter Belastung der auf die Seitenwände einwirkende Druck ungleichmäßig verteilt wird, was wiederum zu einem ungleichmäßigen Spannungsprofil mit lokalen Spannungsspitzen innerhalb des Gehäuses führt. Um dieses ungleichmäßige Spannungsprofil zu kompensieren bedarf es einem vergleichsweise erhöhten Materialeinsatz für die Seitenwände des Gehäuses.

Eine Möglichkeit den Materialeinsatz für die Seitenwände zu minimieren und ein gleichmäßiges Spannungsprofil innerhalb des Gehäuses zu erzeugen besteht darin, die Seitenwände des Gehäuses mit lokalen Versteifungen oder Verstärkungsrippen zu versehen. Aufgrund derartiger Maßnahmen sind jedoch mehr Arbeitsschritte für die Fertigstellung eines Rückflussverhinderers nötig, was letztendlich die Wirtschaftlichkeit der Produktion eines Rückflussverhinderers negativ beeinflusst.

Der vorliegenden Erfindung liegt somit die Aufgabe zugrunde, die genannten Probleme bei der Produktion eines Gehäuses für einen Rückflussverhinderer einer Rohrleitung zu beseitigen und insbesondere einen Rückflussverhinderer bereit zu stellen, der bei vergleichsweise geringem Materialeinsatz für das Gehäuse eines Rückflussverhinderers die nötige Festigkeit und ein möglichst gleichmäßiges Spannungsprofil aufweist.

Diese Aufgabe wird bei einem Rückflussverhinderer nach dem Oberbegriff des Anspruchs 1 durch die kennzeichnenden Merkmale des Anspruchs 1 gelöst. Weiterbildungen und vorteilhafte Ausgestaltungen ergeben sich aus den abhängigen Ansprüchen.

Der erfindungsgemäße Rückflussverhinderer für eine Rohrleitung umfasst ein Gehäuse oder ein Gehäuse und einen Zwischenabschnitt, ein zumindest weitestgehend in dem Gehäuse und/oder dem Zwischenabschnitt angeordnetes und drehbar gelagertes Verschlusselement, eine Aufnahme für das Lager des Verschlusselements sowie zwei Flansche, wobei jeder Flansch eine im Querschnitt runde Öffnung aufweist und die Flansche derart an den Enden des Gehäuses und/oder des Zwischenabschnitts angeordnet sind, dass die Flansche und das zwischen den Flanschen angeordnete Gehäuse und/oder der Zwischenabschnitt von einem Medium entlang einer Längsachse bzw. Durchströmungsrichtung des Gehäuses und/oder des Zwischenabschnitts durchströmbar ist. Dabei ist das Gehäuse zwischen den Flanschen wenigstens auf der Innenseite, bevorzugt auf der Innen- und Außenseite des Gehäuses, derart ausgestaltet, dass es parallel, bevorzugt parallel und senkrecht zur Durchströmungsrichtung, keine ebenen Flächen aufweist.

In Sperrrichtung betrachtet, weist der Rückflussverhinderer zunächst einen Flansch auf, dessen Durchtrittsöffnung einen runden Querschnitt aufweist. An diesen Flansch schließt sich kraft-, form- und/oder stoffschlüssig das Gehäuse des Rückflussverhinderers an. Ausgehend von der Durchtrittsöffnung des Flansches weitet sich das Gehäuse in Sperrrichtung gesehen senkrecht zur Sperrrichtung auf. Nachdem das Gehäuse eine maximale Ausdehnung erreicht hat, kann sich das Gehäuse zunächst wieder verjüngen oder direkt kraft-, form-, und/oder stoffschlüssig in einen Zwischenabschnitt übergehen. Dieser Zwischenabschnitt verjüngt sich oder geht direkt kraft-, form- und/oder stoffschlüssig in einen weiteren Flansch über. Dieser weitere Flansch weist ebenfalls eine im Querschnitt runde Durchtrittsöffnung auf. Dabei können die Durchtrittsöffnungen der beiden Flansche einen unterschiedlichen Durchmesser aufweisen.

Auf der Oberseite des Zwischenabschnitts ist eine Aufnahme angeordnet, in der das Lager der Verschlussvorrichtung, welche das Schließelement umfasst, anordbar ist. An der Unterseite des Zwischenabschnitts kann ein Druckstoßdämpfungsventil, welches sich in einem entsprechenden Druckstoßdämpfungsventilgehäuse befindet, angeordnet sein. Die Aufnahme, wie auch das unter Umständen angeordnete Druckstoßdämpfungsventilgehäuse sind dabei in Durchströmungsrichtung gesehen näher zum ersten Flansch positioniert. Des Weiteren können sowohl der Zwischenabschnitt, die Aufnahme, als auch das Druckstoßdämpfungsventilgehäuse zwecks ihrer technischen Funktionsfähigkeit eben bzw. plan ausgebildete Bereiche aufweisen.

Aufgrund der vorteilhaften Ausgestaltung des Gehäuses, welches auf der Innenseite, bevorzugt auf der Innen- und Außenseite des Gehäuses parallel, bevorzugt parallel und senkrecht zur Durchströmungsrichtung keine ebenen Flächen aufweist, wird der Druck, der von der über dem Schließelement anstehenden Wassersäule hervorgerufen wird, gleichmäßiger über die gesamte Fläche des Gehäuses verteilt. Simulationen wie auch praktische Versuche haben ergeben, dass die erfindungsgemäße Ausgestaltung des Gehäuses des Rückflussverhinderers ein gleichmäßigeres Spannungsprofil innerhalb des Gehäuses und des Zwischenabschnitts erzeugt.

Wegen der gleichmäßigeren Druckverteilung innerhalb des Gehäuses des Rückflussverhinderers ist es nicht mehr notwendig einzelne Bereiche der Seitenwände des Rückflussverhinderers zu verstärken. Vielmehr ist es möglich die Stärke des Gehäuses vergleichsweise gering zu dimensionieren. Das erfindungsgemäße Gehäuse sieht insbesondere Materialstärken für das Gehäuse von 5 bis 15 mm, bevorzugt von 5 bis 12 mm und ganz besonders bevorzugt von 7 bis 11 mm vor.

Ein mögliches Einsatzgebiet eines Rückflussverhinderers mit einer erfindungsgemäßen Verschlussvorrichtung stellt die Verwendung in einem Rohrleitungssystem und/oder einer Zu- und/oder Ableitung einer Abwasserhebeanlage dar. Abwasserhebeanlagen sind automatisch arbeitende Anlagen, die periodisch oder bei Vorliegen eines bestimmten Füllstandes eines mit Abwasser gefüllten Vorratsbehälters das Abwasser aus eben diesem Vorratsbehälter herauspumpen und einem weiterführenden Rohrleitungssystem zuführen. Abwasserhebeanlagen befinden sich zumeist an dem tiefsten Punkt der Förderstrecke, weswegen nach dem Abschalten der Förderpumpe, welche das Abwasser aus dem Vorratsbehälter pumpt, Restwasser, welches sich zwischen Förderpumpe und Scheitelpunkt der Förderstrecke befindet, zurück in Richtung Förderpumpe bzw. Vorratsbehälter fließt. Aufgrund des zurückfließenden Restwassers kann es zu Beschädigungen an der Abwasserhebeanlage und insbesondere an der Förderpumpe oder den Rohrleitungen kommen. Um eine Beschädigung an der Förderpumpe und/oder der Rohrleitung zu vermeiden, werden heutige Abwasserhebeanlagen in der Regel mit einem Rückflussverhinderer versehen, der das Zurückfließen des Restwassers in Richtung Förderpumpe verhindert.

Erfindungsgemäss wird das Gehäuse und/oder eine Grundform des Zwischenabschnitts im Querschnitt senkrecht zur Durchströmungsrichtung mittels dreier Kreise und dreier konvexer Linien aufgespannt, wobei die Mittelpunkte der Kreise auf den Ecken eines Dreiecks angeordnet sind und benachbarte Kreise über eine Linie die derart tangential an den Kreisen anliegt, dass das Dreieck von der Linie nicht geschnitten wird, miteinander verbunden sind.

Die Innenkontur, bevorzugt die Innen- und Außenkontur des erfindungsgemäßen Gehäuses und/oder die erfindungsgemäße Grundform des Zwischenabschnitts lässt sich über drei Kreise 1 bis 3 und drei konvexe Linien darstellen. Die Mittelpunkte der Kreise 1 bis 3 liegen dabei auf den Ecken eines Dreiecks. Die drei Kreise 1 bis 3 werden über konvex ausgeformte Linien, welche tangential an den Kreisen 1 bis 3 anliegen, miteinander verbunden. Es werden immer zwei benachbarte Kreise über eine konvex ausgeformte Linie miteinander verbunden. Die letztendliche Innenkontur, bevorzugt Innen- und Außenkontur des Gehäuses und/oder die erfindungsgemäße Grundform des Zwischenabschnitts ergibt sich aus den drei konvex ausgeformten Linien und dem Kreisbogen (KB) eines jeden Kreises, der sich zwischen den Berührungspunkten zweier benachbarter konvex ausgeformter Linien befindet.

Dabei lassen sich die konvex ausgeformten Linien ebenfalls mittels Kreisbögen dreier weiterer Kreise 4 bis 6 beschreiben, deren Mittelpunkte wiederum auf einem weiteren Dreieck angeordnet sind.

In Durchströmungsrichtung betrachtet sind die geometrischen Hilfselemente zur Darstellung der Innenkontur, bevorzugt Innen- und Außenkontur des Gehäuses und/oder der Grundform des Zwischenabschnitts derart angeordnet, dass das die Mittelpunkte der drei Kreise 1 bis 3 verbindende Dreieck mit einer Spitze nach unten zeigt und die der Spitze gegenüberliegende Seite des Dreiecks im weitesten Sinne parallel zur Gehäuseoberseite und/oder Oberseite des Zwischenabschnitts ausgerichtet ist. Folglich sind im Bereich der Gehäuseoberseite und/oder Oberseite des Zwischenabschnitts zwei der drei Kreise 1 bis 3 angeordnet und im Bereich der Gehäuseunterseite und/oder Unterseite des Zwischenabschnitts lediglich einer der drei Kreise 1 bis 3 angeordnet.

In Durchströmungsrichtung betrachtet liegen die drei die Innenkontur bevorzugt die Innen- und Außenkontur des Gehäuses und/oder die Grundform des Zwischenabschnitts beschreibenden Kreise 1 bis 3 im Bereich des ersten Flansches nahezu deckungsgleich übereinander. Somit wird der Übergang der runden Durchtrittsöffnung des Flansches zum Gehäuse und/oder zur Grundform des Zwischenabschnitts des Rückflussverhinderers ausgebildet. Im weiteren Verlauf in Durchströmungsrichtung betrachtet weitet sich der Querschnitt des Rückflussverhinderers derart, dass sich die Mittelpunkte der Kreise 1 bis 3 voneinander entfernen und/oder die Radien der Kreise 1 bis 3 sich ändern, bevorzugt vergrößern. Nachdem das Gehäuse und/oder die Grundform des Zwischenabschnitts einen maximalen Querschnitt, der sich ungefähr mittig zwischen den beiden Flanschen befindet erreicht hat, verjüngt sich das Gehäuse im weiteren Verlauf. Die Verjüngung des Gehäuses erfolgt derart, dass die Mittelpunkte der Kreise 1 bis 3 sich gegenseitig annähern und/oder die Radien der Kreise 1 bis 3 sich ändern, bevorzugt verkleinern. Im Bereich des in Durchströmungsrichtung betrachteten zweiten Flansches liegen die drei Kreise erneut weitestgehend übereinander, wodurch ein konstruktiver Übergang zwischen dem Gehäuse und der im Querschnitt runden Durchtrittsöffnung des zweiten Flansches gewährleistet wird.

Die konvex ausgeformten Linien, die sich über drei Kreise 4 bis 6 beschreiben lassen, werden entsprechend der Veränderungen der Kreise 1 bis 3 derart angepasst, dass für jeden Querschnitt in Durchströmungsrichtung betrachtet ein tangentialer Übergang zwischen den konvex ausgeformten Linien und den Kreisen 1 bis 3 gewährleistet ist. Dazu werden im Verlauf in Durchströmungsrichtung betrachtet die Mittelpunkte der Kreise 4 bis 6 voneinander entfernt und/oder die Radien der Kreise 4 bis 6 verändert, bevorzugt vergrößert. Nachdem das Gehäuse und/oder die Grundform des Zwischenabschnitts einen maximalen Querschnitt, der sich ungefähr mittig zwischen den beiden Flanschen befindet, erreicht hat, verjüngt sich das Gehäuse im weiteren Verlauf. Die Verjüngung des Gehäuses erfolgt derart, dass die Mittelpunkte der Kreise 4 bis 6 sich gegenseitig annähern und/oder die Radien der Kreise 4 bis 6 sich ändern, bevorzugt verkleinern.

Zweckmäßigerweise weisen wenigstens zwei Kreise einen gleichen Durchmesser auf.

Insbesondere bei einer Ausgestaltung in der die geometrischen Hilfselemente zur Darstellung der Innenkontur, bevorzugt Innen- und Außenkontur des Gehäuses und/oder der Grundform des Zwischenabschnitts derart angeordnet sind, dass das die Mittelpunkte der drei Kreise 1 bis 3 verbindende Dreieck mit einer Spitze nach unten zeigt und die der Spitze gegenüberliegende Seite des Dreiecks im weitesten Sinne parallel zur Gehäuseoberseite und/oder Oberseite des Zwischenabschnitts ausgerichtet ist, bietet es sich an die Kreise, deren Mittelpunkte an der weitestgehend parallel zur Gehäuseoberseite und/oder Oberseite des Zwischenabschnitts befindlichen Seite angeordnet sind gleichgroß auszugestalten. Somit ist es möglich, den zwischen diesen beiden Kreisen angeordneten Kreisbogen bzw. die konvex ausgeformte Linie derart tangential an die Kreise anzulegen, dass die Summe der Tangentensteigungen des Kreisbogens sich zu null addieren. Damit wird eine symmetrische Ausgestaltung bezüglich einer Längsachse des Rückflussverhinderers ermöglicht.

Eine vorteilhafte Ausgestaltung der Erfindung sieht vor, dass das Dreieck ein gleichschenkliges Dreieck ist.

Dabei ist es vorteilhaft, wenn die Seiten des Dreiecks, die an die nach unten zeigende Spitze angrenzen gleichschenklig ausgebildet sind. Folglich weisen die beiden Kreise, die im Bereich der Gehäuseoberseite und/oder Oberseite des Zwischenabschnitts angeordnet sind einen gleichen Abstand zum Mittelpunkt des dritten Kreises, der im Bereich der Gehäuseunterseite und/oder Unterseite des Zwischenabschnitts angeordnet ist auf. Je symmetrischer die Ausgestaltung des Gehäuses und insbesondere des Gehäusequerschnitts ist, desto gleichmäßiger ist die Druckverteilung und somit auch das Spannungsprofil innerhalb des Gehäuses des Rückflussverhinderers. Die Ausgestaltung des Gehäusequerschnitts mittels eines gleichschenkligen Dreiecks führt nah an eine gleichmäßig symmetrische Ausgestaltung, weist jedoch den Vorteil auf, dass die Gehäuseoberseite und/oder Oberseite des Zwischenabschnitts eine von den Gehäuseseitenwänden und/oder Seitenwänden des Zwischenabschnitts abweichende Rundung aufweisen kann. Eine derartige abweichende Ausgestaltung ist bei der Funktionsfähigkeit einer in dem Rückflussverhinderer angeordneten Verschlussvorrichtung und insbesondere bei der unbeeinflussten Verschwenkung des Schließelements wichtig.

Es ist zweckmäßig wenn der Querschnitt des Gehäuses und/oder der Grundform des Zwischenabschnitts die Form eines Reuleaux-Polygons aufweist.

Wie bereits oben ausgeführt, ist die Druckverteilung und somit auch das Spannungsprofil innerhalb des Gehäuses des Rückflussverhinderers umso gleichmäßiger je symmetrischer die Ausgestaltung des Gehäuses und/oder der Grundform des Zwischenabschnitts und insbesondere des Gehäusequerschnitts ist. Die Ausgestaltung des Gehäuses und/oder der Grundform des Zwischenabschnitts mit einem Reuleaux-polygonförmigen Querschnitt besitzt den Vorteil, dass sich der Druck möglichst gleichmäßig auf das Gehäuse verteilen kann.

Vorteilhafterweise ist der Durchmesser des Gehäuses entlang der Durchströmungsrichtung unterschiedlich.

Ausgehend von den Flanschen weitet sich der Querschnitt des Rückflussverhinderers zunächst auf, bis er weitestgehend mittig zwischen den Flanschen einen maximalen Querschnitt erreicht hat und sich anschließend wieder verjüngt.

Es ist zweckmäßig wenn die konvexe Linie, welche weitestgehend parallel zur Aufnahme für das Lager des Schließelements verläuft, einen möglichst großen Radius aufweist.

In einer Durchflussstellung wird das Schließelement auf Grund des durchströmenden Wassers aus seiner Schließstellung heraus bewegt und liegt auf Grund der drehbaren Lagerung weitestgehend parallel zur Gehäuseoberseite an eben dieser an. Auf Grund der zuvor beschriebenen Ausgestaltung des Gehäuses und insbesondere der Gehäuseoberseite entsteht zwischen einem planausgestalteten Schließelement und einer erfindungsgemäß ausgestalteten Gehäuseoberseite ein Hohlraum bzw. Totraum. Um diesen Totraum möglichst gering, das heißt mit einem möglichst kleinen Volumen auszugestalten, ist es vorteilhaft den Radius der konvexen Linie, welche weitestgehend parallel zur Aufnahme für das Lager des Schließelements verläuft bzw. des Kreisbogens 4 möglichst groß auszugestalten. Je größer der Radius von der konvexen Linie bzw. von Kreis 4 ist, desto mehr gleicht der Kreisbogen 4 einer ebenen Fläche, an die sich das plan ausgestaltete Schließelement weitestgehend bündig anlegen kann.

Eine vorteilhafte Ausgestaltung der Erfindung sieht vor, dass das Gehäuse und/oder der Zwischenabschnitt als Gussstück ausgebildet ist.

Auf Grund der durchaus komplexen Form des Gehäuses ist es produktionstechnisch von Vorteil, das Gehäuse und/oder den Zwischenabschnitt als Gussstück zu fertigen. Dadurch entfallen sämtliche vorbereitenden Maßnahmen zur Herstellung einzelner Gehäuseelemente sowie die Verbindung der gleichen zu einem Gehäuse eines Rückflussverhinderers. Folglich entfallen viele Arbeitsschritte bei der Produktion eines Rückflussverhinderers, was wiederum zu einer Zeit- und Kostenersparnis führt.

Zweckmäßigerweise sind das Gehäuse und/oder der Zwischenabschnitt und/oder die Aufnahme für das Lager des Schließelements und/oder wenigstens ein Flansch als einteiliges Gussstück ausgebildet.

Die Ausgestaltung möglichst aller statischen Bauteile eines Rückflussverhinderers verringert die zur Konstruktion eines Rückflussverhinderers benötigten Arbeitsschritte in einer vorteilhaften Art und Weise. Idealerweise werden alle nicht beweglich mit dem Rückflussverhinderer verbundenen Bauteile als einteiliges Gussstück ausgebildet.

Weiterbildungen und vorteilhafte Ausgestaltungen der Erfindung können sich auch aus den nachfolgenden Beschreibungen von Ausführungsbeispielen ergeben, die in der Zeichnung dargestellt sind. In dieser zeigen:
- Fig. 1: einen erfindungsgemäßen Rückflussverhinderer in einer räumlichen Ansicht,
- Fig. 2: eine Draufsicht eines erfindungsgemäßen Rückflussverhinderers,
- Fig. 3: eine Seitenansicht eines Längsschnitts entlang der Mittelachse eines erfindungsgemäßen Rückflussverhinderers in einer Durchflussstellung (Fig. 3b) sowie einer Sperrstellung (Fig. 3a) eines Schließelements,
- Fig. 4: den Aufbau eines Bereichs der Innenkontur, bevorzugt der Innen- und Außenkontur eines erfindungsgemäßen Rückflussverhinderers mittels verschiedener Kreisbögen,
- Fig. 5: unterschiedliche Querschnittsansichten eines erfindungsgemäßen Rückflussverhinderers,

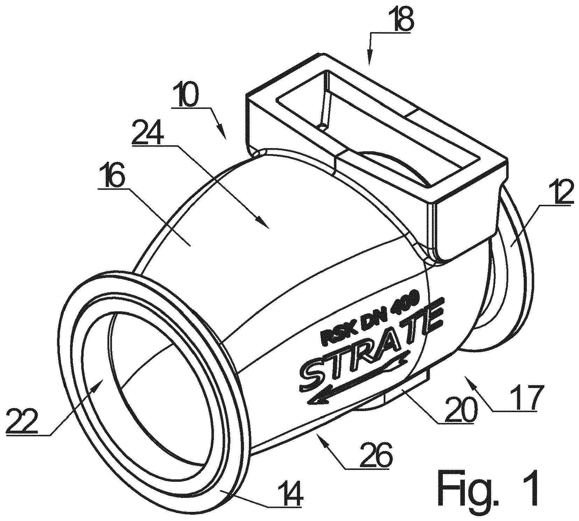

Werden in den Figuren 1 bis 5 gleiche Bezugsziffern verwendet, so bezeichnen diese gleiche Teile, sodass zwecks Vermeidung von Wiederholungen nicht bei jeder Figurenbeschreibung auf ein bereits beschriebenes Bauteil erneut eingegangen werden muss.

Figur 1 zeigt einen erfindungsgemäßen Rückflussverhinderer 10 in einer räumlichen Ansicht. Dieser Rückflussverhinderer 10 umfasst einen ersten Flansch 12 und einen zweiten Flansch 14, ein zwischen den Flanschen angeordnetes Gehäuse 16, einen Zwischenabschnitt 17 sowie eine Aufnahme 18 für eine Verschlussvorrichtung und ein Druckstoßdämpfungsventilgehäuse 20 für ein Druckstoßdämpfungsventil. In dieser räumlichen Darstellung ist bereits die nicht ebene bzw. plane Ausgestaltung des Gehäuses 16 erkennbar. Darüber hinaus zeigt die Figur die kreisförmigen Durchtrittsöffnungen 22 der Flansche 12, 14. Zudem ist der von den Flanschen 12, 14 ausgehende sich aufweitende Querschnitt des Gehäuses 16 und des Zwischenabschnitts 17 erkennbar. Die Seite des Zwischenabschnitts 17 an der die Aufnahme 18 angeordnet ist, wird als Oberseite des Zwischenabschnitts 17 bezeichnet. Diese geht in die Gehäuseoberseite 24 fließend über. Die Seite des Zwischenabschnitts 17 die der Oberseite des Zwischenabschnitts 17 gegenüber liegt und an der das Druckstoßdämpfungsventilgehäuse 20 angeordnet ist, wird als Unterseite des Zwischenabschnitts 17 bezeichnet. Diese geht in die Gehäuseunterseite 26 fließend über.

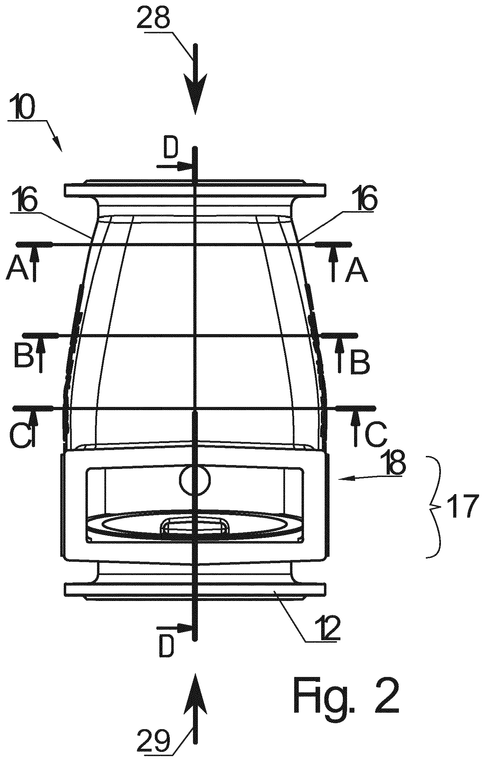

Figur 2 zeigt einen erfindungsgemäßen Rückflussverhinderer 10 in einer Draufsicht. Zu erkennen sind die Flansche 12, 14 zwischen denen das Gehäuse 16 und der Zwischenabschnitt 17 angeordnet ist. Des Weiteren zeigt die Figur die Aufnahme 18 für eine Verschlussvorrichtung. Auf Grund der technischen Funktionsfähigkeit weist die Aufnahme 18 der Verschlussvorrichtung eben bzw. plan ausgebildete Bereiche auf. In Sperrrichtung 28 betrachtet ist die von Flansch 14 ausgehende sich aufweitende Querschnittsform des Gehäuses 16 gut erkennbar. Das Gehäuse 16 weist ungefähr in Höhe der Schnittebene C-C eine maximale Breite auf. Im weiteren Verlauf in Sperrrichtung 28 betrachtet verjüngt sich das Gehäuse 16 wieder, was in Figur 2 bereits zu erahnen ist und geht anschließend in den Zwischenabschnitt über.

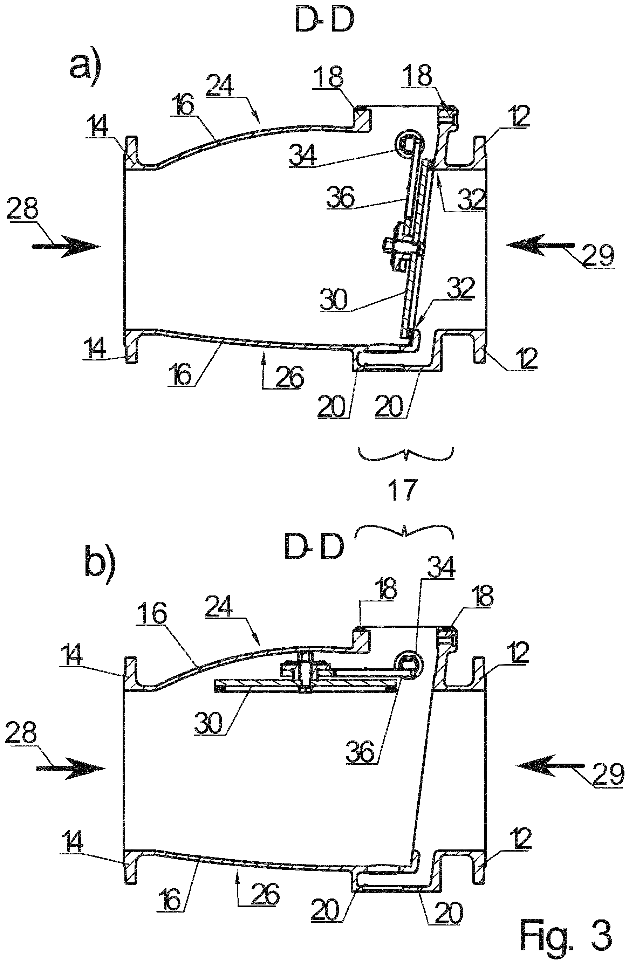

Figur 3 zeigt eine Seitenansicht eines Längsschnitts entlang der Mittelachse D-D (siehe Fig. 2) eines erfindungsgemäßen Rückflussverhinderers 10 in einer Durchflussstellung sowie einer Sperrstellung eines Schließelements 30. In Figur 3a ist der erfindungsgemäße Rückflussverhinderer 10 mit einem Schließelement 30 in Sperrstellung dargestellt. Dabei liegt das Schließelement 30 an Anlageflächen 32 des Zwischenelements 17 des Rückflussverhinderers 10 an. Des Weiteren zeigt die Figur die exemplarisch dargestellte Lagerung 34 sowie das an der Lagerung 34 angeordnete Schließblech 36, welches das Schließelement 30 mit dem Lager 34 verbindet.

Figur 3b zeigt den erfindungsgemäßen Rückflussverhinderer 10 mit einem sich in Durchflussstellung befindlichen Schließelement 30. In dieser Durchflussstellung ist das Schließelement 30 auf Grund des durchfließenden Mediums weitestgehend parallel zur Gehäuseoberseite 24 ausgerichtet.

Des Weiteren ist die nicht eben bzw. plan ausgestaltete Innenkontur der Gehäuseoberseite 24 und der Gehäuseunterseite 26 zu erkennen. Ausgehend von Flansch 14 weitet sich das Gehäuse 16 an der Gehäuseoberseite 24 nach oben und der Gehäuseunterseite 26 nach unten auf, bis eine maximaler Abstand zwischen der Gehäuseoberseite 24 und der Gehäuseunterseite 26 im Bereich weitestgehend mittig zwischen den Flanschen 12, 14 erreicht ist. Anschließend verjüngt sich das Gehäuse 16 indem der Abstand zwischen Gehäuseoberseite 24 und Gehäuseunterseite 26 durch ein Absenken der Gehäuseoberseite 24 und ein Anheben der Gehäuseunterseite 26 verringert wird.

In dem in diesem Längsschnitt gezeigten Fall, ist zwischen dem Gehäuse 16 und dem Flansch 12 im Bereich Oberseite des Zwischenabschnitts 17 die Aufnahme 18 und im Bereich der Unterseite des Zwischenabschnitts 17 das Druckstoßdämpfungsventilgehäuse 20 angeordnet. Folglich besteht eine Verbindung zwischen Gehäuse 16 und Flansch 12 in diesem Fall überwiegend in den Seitenbereichen des Zwischenabschnitts 17.

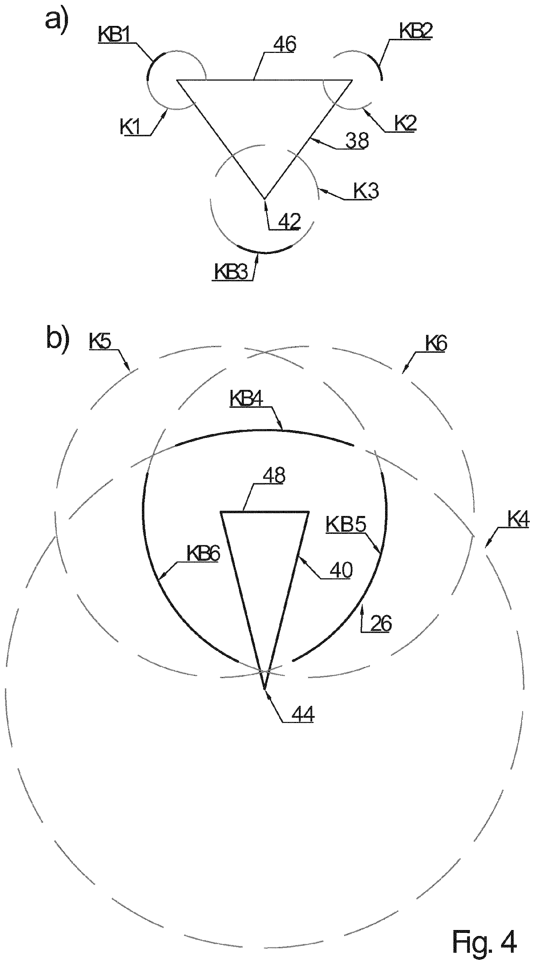

Figur 4 beschreibt schematisch den Aufbau der Innenkontur, bevorzugt der Innen- und Außenkontur des Gehäuses 16 und/oder der Grundform des Zwischenabschnitts 17 eines erfindungsgemäßen Rückflussverhinderers 10 über insgesamt 6 Kreisbögen, welche mittels geometrischer Hilfselemente konstruierbar sind.

Dabei zeigt Figur 4 a) die Kreise K1 bis K3, deren Mittelpunkte auf den Ecken eines gleichschenkligen Dreiecks 38 angeordnet sind und deren Kreisbögen KB1 bis KB3, welche die oberen Ecken bzw. Randbereiche (KB1, KB2) des Gehäuses 16 und/oder der Grundform des Zwischenabschnitts 17 sowie die Gehäuseunterseite 26 (KB3) der Innenkontur, bevorzugt der Innen- und Außenkontur des Gehäuses 16 und/oder der Grundform des Zwischenabschnitts 17 ausbilden.

Figur 4 b) zeigt die Kreise K4 bis K6, deren Mittelpunkte auf den Ecken eines gleichschenkligen Dreiecks 40 angeordnet sind und deren Kreisbögen KB4 bis KB6, welche die Gehäuseoberseite 24 (KB4) sowie die Seitenbereiche (KB5, KB6) der Innenkontur, bevorzugt der Innen- und Außenkontur des Gehäuses 16 und/oder der Grundform des Zwischenabschnitts 17 ausbilden. Die Kreisbögen KB4 bis KB6 stellen dabei die konvex ausgeformten Linien dar, die jeweils zwei benachbarte Kreise K1 bis K3 tangential miteinander verbinden.

Die gleichschenkligen Dreiecke 38, 40 auf deren Ecken die Mittelpunkte der Kreise K1 bis K3 bzw. K4 bis K6 angeordnet sind, weisen dabei mit einer Spitze 42 bzw. 44 nach unten, so dass die gegenüberliegende Seite 46 bzw. 48 des Dreiecks weitestgehend horizontal ausgerichtet ist.

Die Länge der einzelnen Kreisbögen KB1 bis KB6 wie auch der Radius der Kreise K1 bis K6 ist für verschiedene Querschnittsebenen entlang der Durchströmungsrichtung 29 unterschiedlich. Die Länge der einzelnen Kreisbögen KB1 bis KB6 ergibt sich dabei aus der Vorgabe, dass ein tangentialer Übergang zwischen zwei benachbarten Kreisbögen KB1 bis KB6 erfolgen soll.

In diesem Zusammenhang bedeutet tangentialer Übergang, dass zwei benachbarte Kreisbögen KB1 bis KB6, die sich an jeweils einem Ende berühren, in eben diesem Berührungspunkt die gleiche Tangentensteigung aufweisen. Dabei sind die Kreisbögen KB1 bis KB6 in jeder Querschnittsebene derart angeordnet, dass ein Kreisbogen KB1 bis KB3 immer an einen Kreisbogen KB4 bis KB6 angrenzt. So geht beispielsweise der Kreisbogen KB 1 an seinem einen Ende in den Kreisbogen KB4 und an seinem anderen Ende in den Kreisbogen KB6 über.

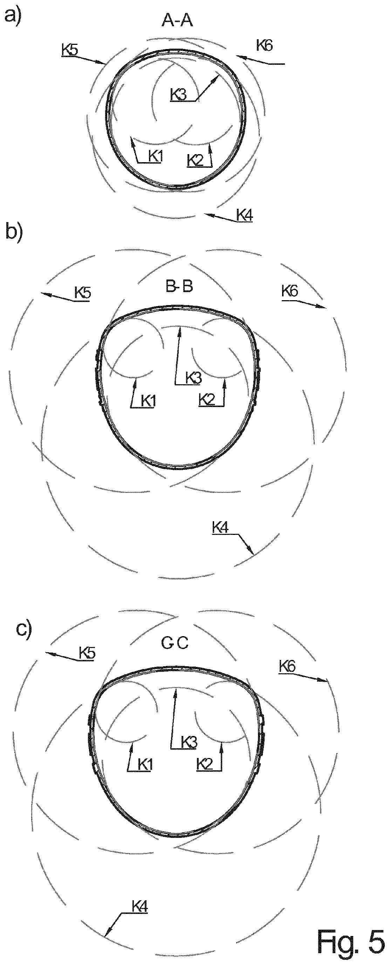

Die zusammengesetzten Kreisbögen KB1 bis KB6 und die damit ausgeformte Innenkontur, bevorzugt Innen- und Außenkontur, sind exemplarisch für einige Querschnitte des Rückflussverhinderers 10 in Figur 5 gezeigt.

Figur 5 zeigt exemplarisch Querschnitte eines Rückflussverhinderers 10 entlang dreier Schnittebenen: A-A, B-B, C-C (siehe Fig. 2). In dieser Darstellung sind ebenfalls die, die Innenkontur, bevorzugt die Innen- und Außenkontur beschreibenden geometrischen Hilfselemente insbesondere die Kreise K1 bis K6 sowie die Dreiecke 38, 40 dargestellt (siehe Fig.4).

Während die in Figur 5 a) gezeigte Schnittebene A-A im Bereich des Flansches 14 positioniert ist, liegt die Schnittebene C-C von Figur 5 c) weitestgehend mittig zwischen den Flanschen 12 und 14. Die dritte Schnittebene B-B, die in Figur 5 b) dargestellt ist, liegt weitestgehend mittig zwischen den zuvor genannten Schnittebenen.

Der Querschnitt einer jeden Schnittebene kann dabei in die Kreisbögen KB1 bis KB6 der Kreise K1 bis K6 zerlegt werden. Die einzelnen Kreisbögen KB1 bis KB6 sind derart angeordnet, dass ein Kreisbogen KB1 bis KB3 immer an einen Kreisbogen KB4 bis KB6 angrenzt. So geht beispielsweise der Kreisbogen KB2 an seinem einen Ende tangential in den Kreisbogen KB4 und an seinem anderen Ende tangential in den Kreisbogen KB5 über.

Die gleichschenkligen Dreiecke 38, 40 auf deren Ecken die Mittelpunkte der Kreise K1 bis K3 bzw. K4 bis K6 angeordnet sind, weisen dabei mit einer Spitze 42 bzw. 44 nach unten, so dass die gegenüberliegende Seite 46 bzw. 48 des Dreiecks weitestgehend horizontal ausgerichtet ist.

### Bezugszeichenliste (ist Teil der Beschreibung)

- 10: Rückflussverhinderer
- 12, 14: Flansch
- 16: Gehäuse
- 17: Zwischenabschnitt
- 18: Aufnahme
- 20: Druckstoßdämpfungsventil
- 22: Durchtrittsöffnung
- 24: Gehäuseoberseite
- 26: Gehäuseunterseite
- 28: Sperrrichtung
- 29: Durchströmungsrichtung
- 30: Schließelement
- 32: Anlagefläche
- 34: Lager
- 36: Schließblech
- 38, 40: Dreieck
- 42, 44: Spitze eines Dreiecks
- 46, 48: Seite eines Dreiecks
- K1 bis K6: Kreis 1 bis Kreis 6
- KB1 bis KB6: Kreisbogen 1 bis Kreisbogen 6

## Patentansprüche

1. Rückflussverhinderer (10) für eine Rohrleitung umfassend ein Gehäuse (16) oder ein Gehäuse (16) und einen Zwischenabschnitt (17), ein zumindest weitestgehend in dem Gehäuse (16) und/oder dem Zwischenabschnitt angeordnetes und drehbar gelagertes Schließelement (30), eine Aufnahme (18) für ein Lager (34) des Schließelements (30) sowie zwei Flansche (12, 14), wobei jeder Flansch (12, 14) eine im Querschnitt runde Öffnung (22) aufweist und die Flansche (12, 14) derart an den Enden des Gehäuses (16) und/oder des Zwischenabschnitts (17) angeordnet sind, dass die Flansche (12, 14) und das zwischen den Flanschen (12, 14) angeordnete Gehäuse (16) und/oder der Zwischenabschnitt (17) von einem Medium entlang einer Längsachse bzw. Durchströmungsrichtung (29) des Gehäuses (16) und/oder Zwischenabschnitts (17) durchströmbar ist, wobei das Gehäuse (16) zwischen den Flanschen (12, 14) wenigstens auf der Innenseite, bevorzugt auf der Innen- und Außenseite des Gehäuses (16) parallel, bevorzugt parallel und senkrecht zur Durchströmungsrichtung (29) keine ebenen Flächen aufweist, **dadurch gekennzeichnet, dass** das Gehäuse (16) und/oder eine Grundform des Zwischenabschnitts (17) im Querschnitt senkrecht zur Durchströmungsrichtung (29) mittels dreier Kreise (K1, K2, K3) und dreier konvexer Linien aufgespannt wird, wobei die Mittelpunkte der Kreise (K1, K2, K3) auf den Ecken eines Dreiecks (38) angeordnet sind und benachbarte Kreise (K1, K2, K3) über eine Linie, die derart tangential an den Kreisen (K1, K2, K3) anliegt, dass das Dreieck (38) von der Linie nicht geschnitten wird, miteinander verbunden sind.

2. Rückflussverhinderer (10) nach Anspruch 1, **dadurch gekennzeichnet, dass** die konvexe Linie über einen Kreisbogen (KB4, KB5, KB6) darstellbar ist.

3. Rückflussverhinderer (10) nach einem der Ansprüche 1 bis 2, **dadurch gekennzeichnet, dass** wenigstens zwei Kreise (K1, K2, K3, K4, K5, K6) einen gleichen Durchmesser aufweisen.

4. Rückflussverhinderer (10) nach einem der Ansprüche 1 bis 3, **dadurch gekennzeichnet, dass** das Dreieck (38, 40) ein gleichschenkliges Dreieck ist.

5. Rückflussverhinderer (10) nach einem der Ansprüche 1 bis 4, **dadurch gekennzeichnet, dass** der Querschnitt des Gehäuses (16) und/oder der Grundform des Zwischenabschnitts (17) die Form eines Reuleaux-Polygons aufweist.

6. Rückflussverhinderer (10) nach einem der Ansprüche 1 bis 5, **dadurch gekennzeichnet, dass** der Durchmesser des Gehäuses (16) entlang der Durchströmungsrichtung (29) unterschiedlich ist.

7. Rückflussverhinderer (10) nach einem der Ansprüche 1 bis 6, **dadurch gekennzeichnet, dass** die konvexe Linie, welche weitestgehend parallel zur Aufnahme (18) für das Lager (34) des Schließelements (30) verläuft, einen möglichst großen Radius aufweist.

8. Rückflussverhinderer (10) nach einem der Ansprüche 1 bis 7, **dadurch gekennzeichnet, dass** das Gehäuse (16) und/oder der Zwischenabschnitt (17) als Gussstück ausgebildet ist.

9. Rückflussverhinderer (10) nach Anspruch 8, **dadurch gekennzeichnet, dass** das Gehäuse (16) und/oder der Zwischenabschnitt (17) und/oder die Aufnahme (18) für das Lager (34) des Schließelements (30) und/oder wenigstens ein Flansch (12, 14) als einteiliges Gussstück ausgebildet ist.

## Claims

1. Backflow preventer (10) for a pipeline, comprising a housing (16) or a housing (16) and an intermediate portion (17), a rotatably mounted closing element (30) which is arranged at least as far as possible in the housing (16) and/or the intermediate portion, a receptacle (18) for a bearing (34) of the closing element (30), and two flanges (12, 14), wherein each flange (12, 14) has a cross-sectionally round opening (22), and the flanges (12, 14) are arranged at the ends of the housing (16) and/or of the intermediate portion (17) in such a way that a medium can flow through the flanges (12, 14) and through the housing (16) arranged between the flanges (12, 14) and/or through the intermediate portion (17) along a longitudinal axis or throughflow direction (29) of the housing (16) and/or intermediate portion (17), wherein the housing (16) has, between the flanges (12, 14), at least on the inner side, preferably on the inner and outer side, of the housing (16), no planar surfaces parallel to, preferably parallel and perpendicular to, the throughflow direction (29), **characterized in that** the housing (16) and/or a basic shape of the intermediate portion (17) are/is spanned, in cross section perpendicular to the throughflow direction (29), by means of three circles (K1, K2, K3) and three convex lines, wherein the centre points of the circles (K1, K2, K3) are arranged on the corners of a triangle (38), and adjacent circles (K1, K2, K3) are connected to one another via a line which lies tangentially on the circles (K1, K2, K3) in such a way that the triangle (38) is not intersected by the line.

2. Backflow preventer (10) according to Claim 1, **characterized in that** the convex line can be represented via a circular arc (KB4, KB5, KB6).

3. Backflow preventer (10) according to either of Claims 1 and 2, **characterized in that** at least two circles (K1, K2, K3, K4, K5, K6) have an equal diameter.

4. Backflow preventer (10) according to one of Claims 1 to 3, **characterized in that** the triangle (38, 40) is an isosceles triangle.

5. Backflow preventer (10) according to one of Claims 1 to 4, **characterized in that** the cross section of the housing (16) and/or the basic shape of the intermediate portion (17) have/has the form of a Reuleaux polygon.

6. Backflow preventer (10) according to one of Claims 1 to 5, **characterized in that** the diameter of the housing (16) is variable along the throughflow direction (29).

7. Backflow preventer (10) according to one of Claims 1 to 6, **characterized in that** the convex line which extends as far as possible parallel to the receptacle (18) for the bearing (34) of the closing element (30) has as large a radius as possible.

8. Backflow preventer (10) according to one of Claims 1 to 7, **characterized in that** the housing (16) and/or the intermediate portion (17) take/takes the form of a casting.

9. Backflow preventer (10) according to Claim 8, **characterized in that** the housing (16) and/or the intermediate portion (17) and/or the receptacle (18) for the bearing (34) of the closing element (30) and/or at least one flange (12, 14) take/takes the form of a one-piece casting.

## Revendications

1. Clapet anti-retour (10) pour une canalisation comprenant un boîtier (16) ou un boîtier (16) et une partie intermédiaire (17), un élément de fermeture (30) disposé au moins très largement et monté de façon rotative dans le boîtier (16) et/ou dans la partie intermédiaire, un logement (18) pour un palier (34) de l'élément de fermeture (30) ainsi que deux brides (12, 14), dans lequel chaque bride (12, 14) présente une ouverture (22) de section transversale ronde et les brides (12, 14) sont disposées aux extrémités du boîtier (16) et/ou de la partie intermédiaire (17), de telle manière que les brides (12, 14) et le boîtier (16) disposé entre les brides (12, 14) et/ou la partie intermédiaire (17) puisse être parcouru(e) par un fluide le long d'un axe longitudinal ou d'une direction d'écoulement (29) du boîtier (16) et/ou de la partie intermédiaire (17), dans lequel le boîtier (16) ne présente entre les brides (12, 14), au moins sur le côté intérieur, de préférence sur le côté intérieur et le côté extérieur du boîtier (16), aucune face plane parallèle, de préférence parallèle et perpendiculaire à la direction d'écoulement (29), **caractérisé en ce que** le boîtier (16) et/ou une forme de base de la partie intermédiaire (17) est mené(e) en section transversale perpendiculairement à la direction d'écoulement (29) au moyen de trois cercles (K1, K2, K3) et de trois lignes convexes, dans lequel les centres des cercles (K1, K2, K3) sont disposés aux sommets d'un triangle (38) et des cercles voisins (K1, K2, K3) sont reliés l'un à l'autre par une ligne, qui est tangente aux cercles (K1, K2, K3), de telle manière que le triangle (38) ne soit pas coupé par la ligne.

2. Clapet anti-retour (10) selon la revendication 1, **caractérisé en ce que** la ligne convexe peut être représentée au moyen d'un arc de cercle (KB4, KB5, KB6).

3. Clapet anti-retour (10) selon une des revendications 1 à 2, **caractérisé en ce qu'**au moins deux cercles (K1, K2, K3, K4, K5, K6) présentent un diamètre identique.

4. Clapet anti-retour (10) selon l'une quelconque des revendications 1 à 3, **caractérisé en ce que** le triangle (38, 40) est un triangle isocèle.

5. Clapet anti-retour (10) selon l'une quelconque des revendications 1 à 4, **caractérisé en ce que** la section transversale du boîtier (16) et/ou de la forme de base de la partie intermédiaire (17) présente la forme d'un polygone de Reuleaux.

6. Clapet anti-retour (10) selon l'une quelconque des revendications 1 à 5, **caractérisé en ce que** le diamètre du boîtier (16) le long de la direction d'écoulement (29) est différent.

7. Clapet anti-retour (10) selon l'une quelconque des revendications 1 à 6, **caractérisé en ce que** la ligne convexe, qui est très largement parallèle au logement (18) pour le palier (34) de l'élément de fermeture (30), présente un rayon aussi grand que possible

8. Clapet anti-retour (10) selon l'une quelconque des revendications 1 à 7, **caractérisé en ce que** le boîtier (16) et/ou la partie intermédiaire (17) est réalisé(e) sous forme de pièce coulée.

9. Clapet anti-retour (10) selon la revendication 8, **caractérisé en ce que** le boîtier (16) et/ou la partie intermédiaire (17) et/ou le logement (18) pour le palier (34) de l'élément de fermeture (30) et/ou au moins une bride (12, 14) est réalisé (e) sous forme de pièce coulée d'un seul tenant.
